# FASCICULE DE BREVET EUROPEEN

(11) **EP 0 424 296 B1**
(45) Date de publication et mention de la délivrance du brevet: **15.06.1994**
(21) Numéro de dépôt: 90440090.0
(22) Date de dépôt: 17.10.1990
(51) Int. Cl.: B60P 3/08

(54) **Plan de chargement composite pour véhicule du type porte-voitures**
Mehrteilige Ladefläche für ein Fahrzeug des Autotransportertyps
Composite loading platform for a car transporting vehicle

(30) Priorité: 17.10.1989 FR 8913722
(43) Date de publication de la demande: 24.04.1991
(73) Titulaire: LOHR INDUSTRIE, 67980 Hangenbieten (FR)
(72) Inventeur: Vogel, Lucien, F-67370 Truchtersheim (FR)
(74) Mandataire: Metz, Paul

(56) Documents cités:
- EP-A- 0 001 364
- DE-A- 3 042 739
- US-A- 2 085 214
- US-A- 3 104 127
- US-A- 3 145 043
- US-A- 3 690 717

## Description

La présente invention se rapporte à un plan de chargement composite pour véhicule du type porte-voitures selon les caractéristiques du préambule de la revendication 1.

Plus particulièrement, le plan de chargement composite comporte des extrémités inclinables pour augmenter la capacité de chargement des véhicules du type porte-voitures.

Pour des raisons de limitation du gabarit routier liées à la réglementation de circulation des véhicules sur les routes ouvertes à la circulation civile, une hauteur maximale a été imposée pour les convois. Celle-ci varie selon les pays. De ce fait, les constructeurs européens se sont fixés sur la hauteur couramment admise, à savoir 4 mètres.

Cette hauteur permet en général de former sur les véhicules porte-voitures deux étages de voitures particulières.

Il n'en est pas de même lors du transport de petits véhicules utilitaires dont les dimensions et les formes ne permettent pas toujours, et en tout cas pas facilement, le transport sur plusieurs niveaux superposés dans le gabarit imposé.

Or, les impératifs de rentabilité existant à tous les niveaux, jouent aussi dans le domaine du transport des petits véhicules utilitaires ou dans le cas de voitures de tourisme de plus grande hauteur.

Pour ce type de véhicules, le chargement en disposition classique fait dépasser du gabarit les parties supérieures des carrosseries.

Ainsi, en fonction des formes particulières de ce type de véhicules, l'imbrication utilisée pour les voitures de tourisme s'avère notablement difficile, voire impossible.

La présente invention a pour but de remédier à ces difficultés en proposant un plan de chargement composite permettant de recevoir et de disposer en au moins deux niveaux de chargement les petits véhicules. Un tel dispositif, avec un plan de chargement supérieur d'une seule pièce est connu par exemple de EP-A-0 001 364. utilitaires dont les caractéristiques de hauteur et de forme laissent supposer une possibilité de transport sur deux niveaux, moyennant une disposition et une orientation appropriées des véhicules transportés.

A cet effet, l'invention se rapporte à un plan de chargement composite destiné à augmenter la capacité des véhicules porteurs, notamment du véhicule porteur remorqueur.

Ce but est atteint grâce aux mesures définies dans la partie caractérisante de la revendication 1.

Outre la possiblité d'augmenter la capacité des véhicules porteurs-remorqueurs pour ce type de petits véhicules utilitaires, l'invention présente de nombreux avantages supplémentaires tels que :
. facilité d'emploi par l'existence d'un plan porteur mobile à la manière des véhicules classiques ;
. rapidité de chargement, en raison du nombre peu élevé de manoeuvres additionnelles nécessitées par la mise en place finale des véhicules ;
. surcoût peu important par l'utilisation du système de levage classique prévu dans les poteaux.

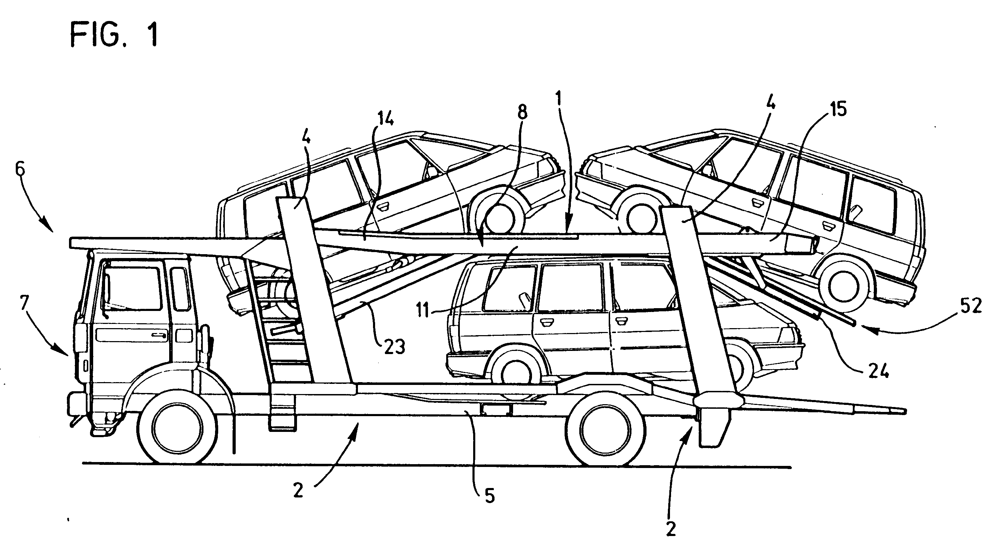

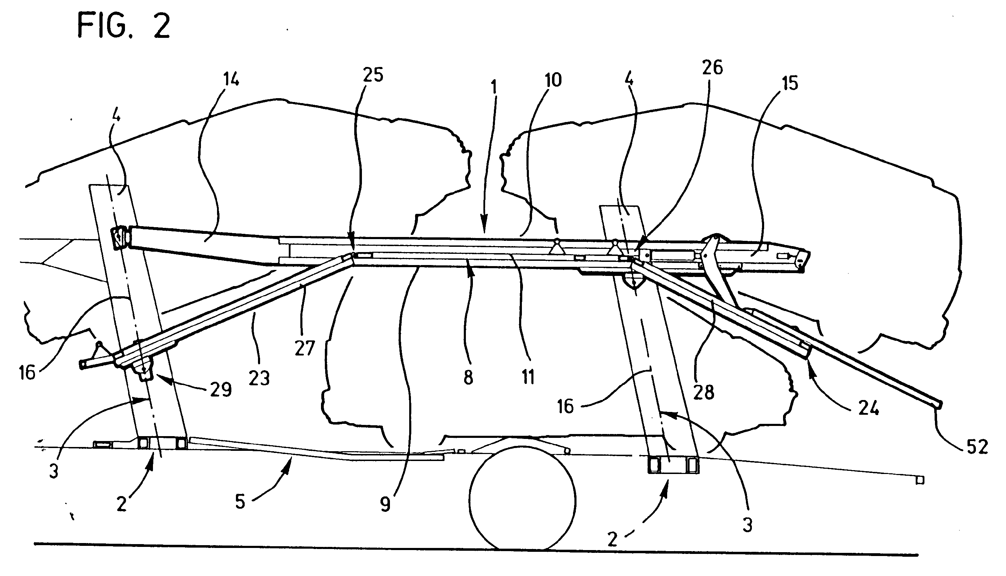

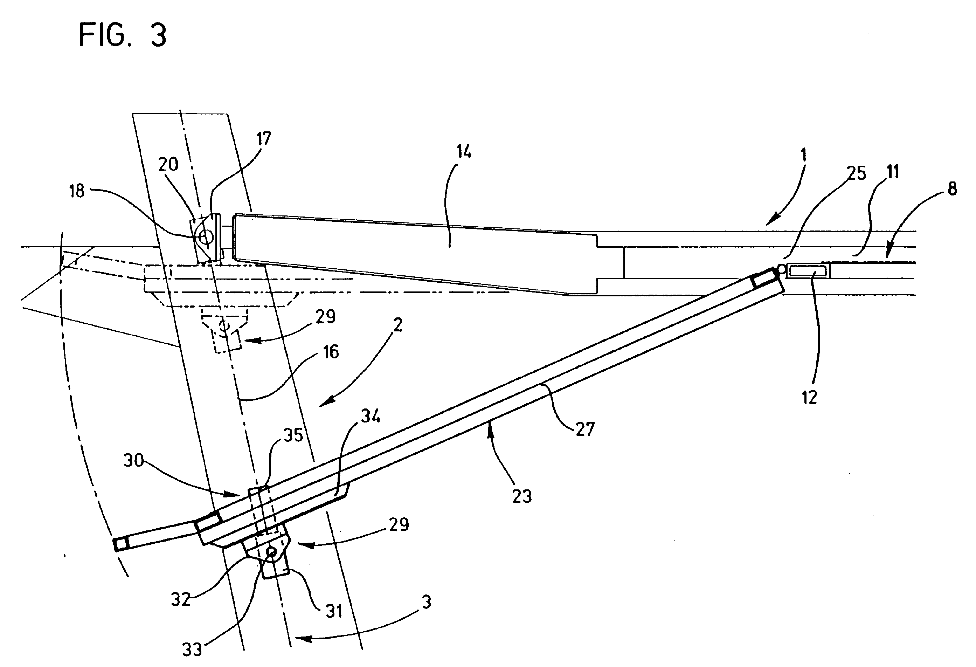

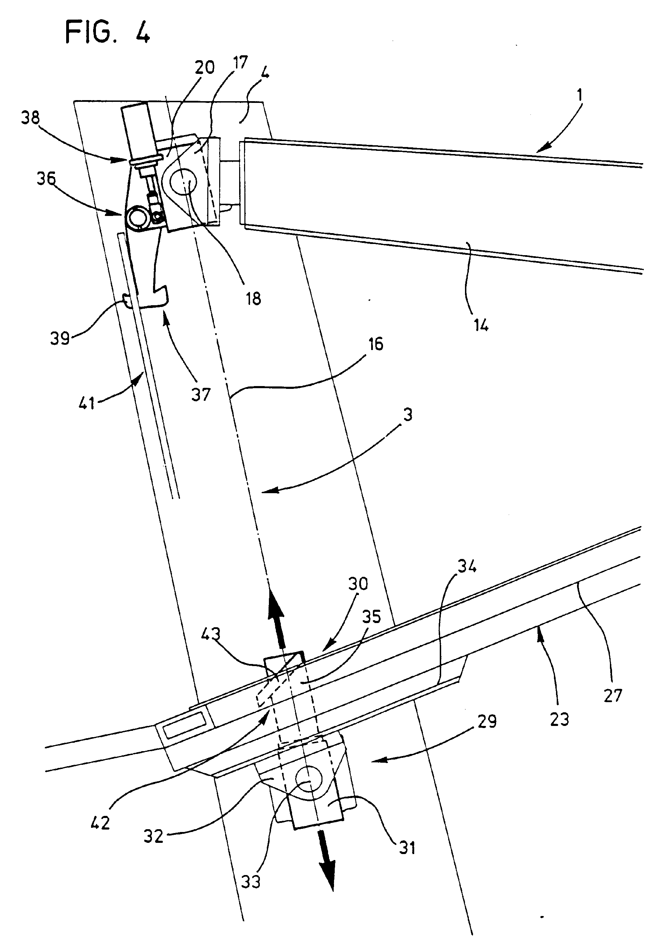

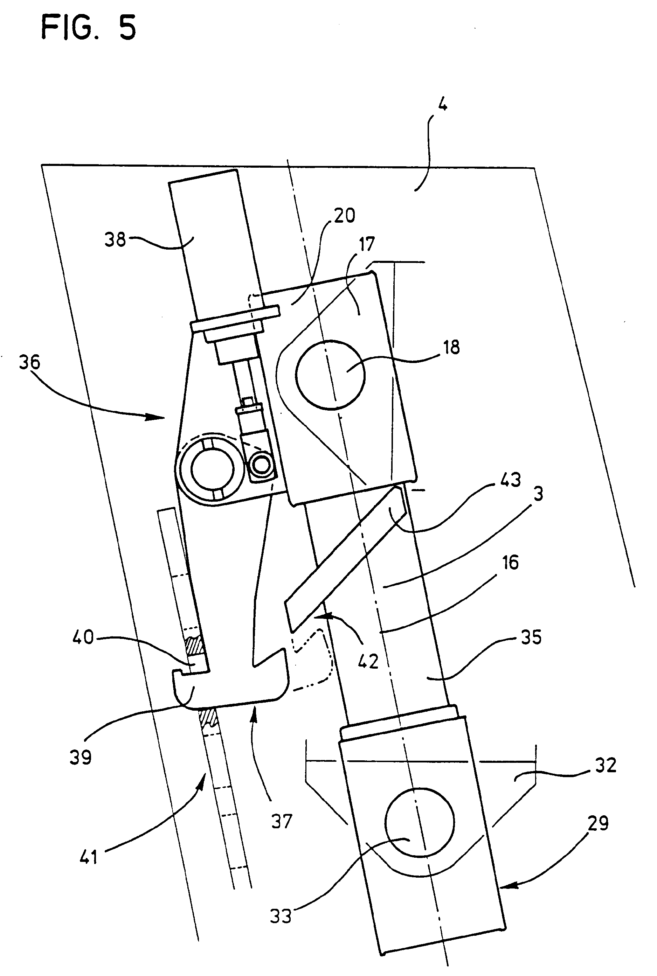

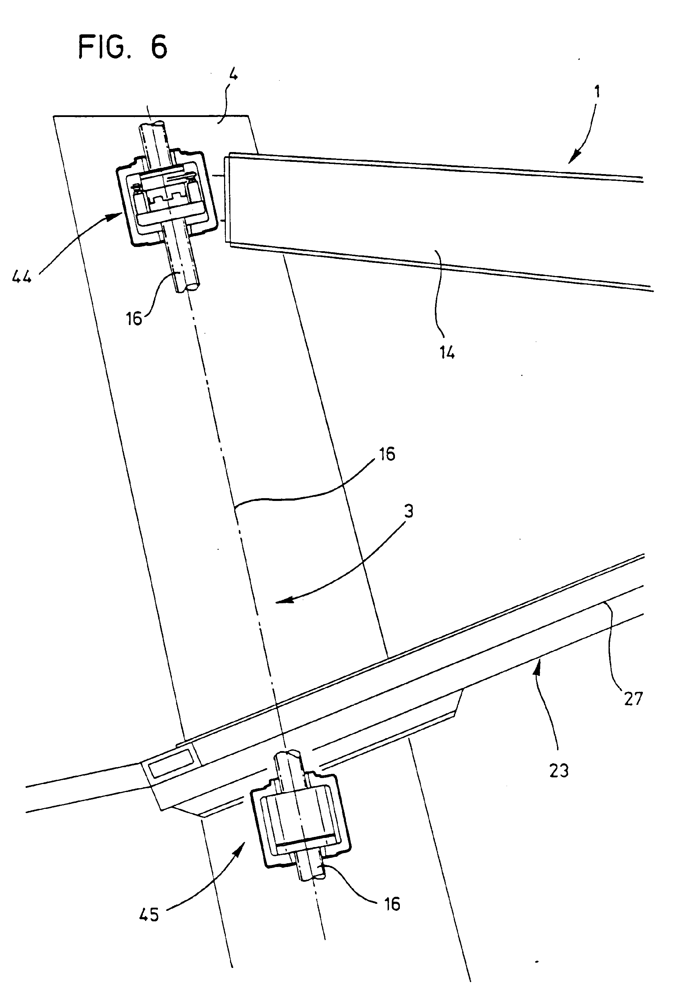

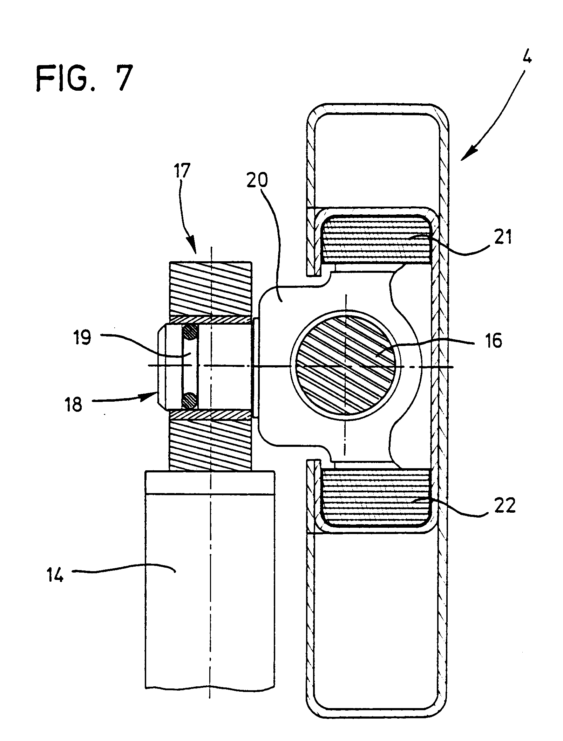

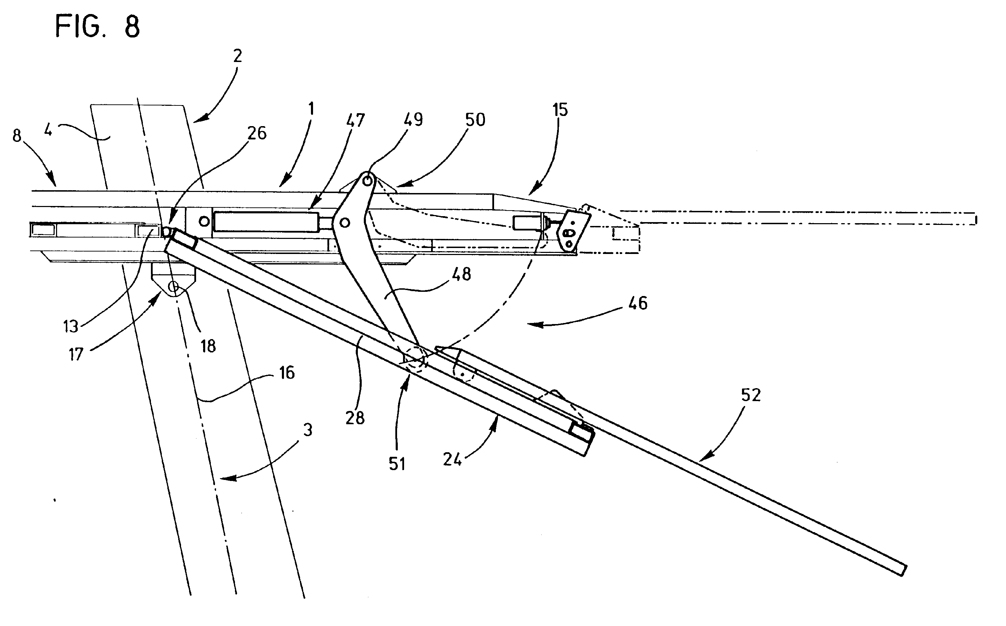

Les caractéristiques techniques et d'autres avantages de l'invention sont consignés dans la description qui suit, effectuée à titre d'exemple non limitatif sur un mode d'exécution en référence aux dessins accompagnants dans lesquels :
. la figure 1 est une vue générale schématique en élévation du véhicule porteur-remorqueur montrant les positions relatives en inclinaison de deux véhicules transportés en position supérieure ;
. la figure 2 est une vue de profil du pont supérieur de chargement ;
. la figure 3 est une vue d'ensemble de la plate-forme inclinable avant et de son dispositif porteur ;
. la figure 4 est une vue schématique en coupe longitudinale d'un poteau ;
. la figure 5 est une vue de profil du verrou d'association du dispositif porteur ;
. la figure 6 est une vue schématique en coupe longitudinale d'un poteau utilisant un écrou débrayable ;
. la figure 7 est une vue en coupe transversale sur poteau au niveau d'une articulation sur un écrou ;
. la figure 8 est une vue d'ensemble de la plate-forme inclinable arrière et de son dispositif de soutien .

On inclura dans le sens de l'expression "petits véhicules utilitaires" le cas des voitures de tourisme de plus grande hauteur.

L'idée générale inventive consiste à prévoir un pont de chargement spécifique, mobile verticalement en translation jusqu'à une position supérieure de transport, comprenant une partie médiane fixe et deux extrémités inclinables, afin de permettre à chacune des extrémités l'affaissement d'une partie de chaque véhicule transporté chargé, en vue de pouvoir l'admettre dans le gabarit routier imposé.

Le plan de chargement selon l'invention se compose d'un pont 1 relevable verticalement, à l'aide des ensembles classiques de levage 2, par exemple des ensembles à vis telles que 3 dans des poteaux 4 portés par un châssis 5 d'un véhicule porteur remorqueur 6 à cabine 7.

Le pont 1 se compose d'une partie centrale fixe 8 bordée par des longerons 9 et 10 délimitant un platelage central 11 terminé latéralement par deux traverses 12 et 13.

Les longerons 9 et 10 se prolongent longitudinalement, de chaque côté, à la manière d'un brancard, par deux bras doubles de structure 14 et 15, dont les extrémités prennent chacune un appui d'articulation sur des vis 16 de l'ensemble de levage correspondant par l'intermédiaire d'une fourche ou d'une chape telle que 17, à travers au moins un axe transversal de pivotement 18 à joint 19, fourche ou chape emprisonnant un écrou supérieur 20 en prise sur la vis 16 correspondante des ensembles de levage prévus dans chaque poteau 4.

Les écrous 20 sont guidés en déplacement vertical le long des poteaux par l'intermédiaire d'un profilé de section en "C" le long des gorges duquel coulissent des patins tels que 21 et 22 garnissant les extrémités correspondantes opposées de la fourche 17 emprisonnant chaque écrou.

Le pont supérieur 1 présente ainsi une structure indéformable, plane, réglable en inclinaison, formée du platelage central fixe 8 et de ses bras doubles de structure 14 et 15. Il est susceptible de déplacements verticaux entre une position basse de chargement dans laquelle il se trouve en position inférieure basse contre le châssis 5 du véhicule porteur-remorqueur et une position haute de transport.

Le pont supérieur 1 présente, à chacune de ses extrémités, des plates-formes pivotantes ou inclinables, avant 23, côté cabine, et arrière 24, côté remorque, reliées par une articulation de pivotement, respectivement 25 et 26 par l'un de ses côtés transversaux au platelage fixe 8 de la partie médiane.

Ces plates-formes 23 et 24 sont délimitées latéralement par des glissières ou analogues 27 et 28, et sont susceptibles de mouvements d'inclinaison entre une position haute approximativement dans le plan du platelage central utilisé pour le chargement, et une position rabattue inférieure utilisée pour le transport jusqu'à un degré d'inclinaison limite correspondant à la position d'inclinaison nécessitée par le type de véhicules transportés.

Les plates-formes inclinables sont portées ou soutenues par des dispositifs particuliers.

La plate-forme avant 23 est portée, sur chacun de ses côtés latéraux, par un bloc coulissant 29, déplaçable le long de chaque vis 16 correspondante à l'intérieur de chaque poteau, par l'intermédiaire d'un dispositif porteur de coulissement-blocage 30 prévu à chacune de ses extrémités. Ce dispositif comporte, d'une part, le bloc coulissant 29 formé d'une douille de translation 31, par exemple conformée en écrou simple ou renfermant un écrou simple, mobile le long de la vis correspondante, douille sur laquelle il est articulé par exemple par une fourche 32 montée sur un axe de pivotement 33 et d'autre part, un coulisseau 34 portant, à emplacement variable la plate-forme avant 23, en se déplaçant le long de la glissière 27.

La douille de translation 31 est prolongée vers le haut par une entretoise 35 coaxiale à la vis 16 servant de butée haute d'écartement, comme on le verra ci-après.

Le dispositif de coulissement-blocage 30 coopère avec un verrou mécanique d'association 36 destiné à immobiliser et à bloquer la plate-forme avant 23, le long des poteaux 4, en position de solidarisation avec l'écrou supérieur 20.

Ce verrou 36, représenté plus particulièrement sur les figures 4 et 5 est, selon la variante adoptée, un verrou du type pendulaire.

Il s'agit d'un dispositif de verrou à basculement, formé d'une pièce oscillante de verrouillage 37 actionnée en basculement par un vérin de verrou 38.

Cette pièce oscillante de verrouillage 37 présente une forme générale d'ancre dont une des extrémités 39, en forme de crochet, vient se prendre dans l'une ou l'autre des encoches 40 d'une structure linéaire d'immobilisation 41 fixée le long des poteaux.

Sous l'effet du vérin 38, l'autre extrémité du verrou vient se bloquer en regard dans un coin-butée 42 constituant un arrêt oblique et formé par une pièce oblique de butée 43 montée sur l'entretoise 35 solidaire du corps du bloc coulissant 29.

On examinera maintenant une version à écrou débrayable, représentée sur la figure 6.

Selon cette version, l'écrou supérieur 20 de l'ensemble supérieur de prise avec la vis 16 de l'ensemble de levage est un écrou débrayable 44 assurant l'arrêt à un endroit quelconque sur la vis 16, tout en permettant à cette vis de tourner.

La liaison de la plate-forme inclinable avant 23 avec la vis 16 de l'ensemble de levage s'effectue par l'intermédiaire d'un écrou simple inférieur 45 en prise permanente avec la vis.

Ainsi, la manoeuvre de la vis 16 entraîne le déplacement en inclinaison de l'écrou inférieur 45 et donc la modification d'inclinaison de la plate-forme.

Lorsque la plate-forme est horizontale, l'écrou débrayable est actionné en prise et les deux écrous 44 et 45 se déplacent en parallèle supprimant ainsi la nécessité d'un verrou d'association.

Selon une variante élaborée, l'écrou 45 peut également être remplacé par un écrou débrayable.

La plate-forme arrière 24 est suspendue ou retenue en position inclinée par un dispositif de soutien indépendant de l'ensemble de levage arrière en raison de l'éloignement de son extrémité arrière par rapport au poteau adjacent.

Il s'agit d'un dispositif double de soutien 46, pour chaque côté latéral, à un mécanisme basculant comprenant chacun un bras et un vérin de commande en liaison avec la plate-forme comme on peut le voir plus particulièrement sur la figure 8.

De façon plus détaillée, le dispositif comprend un vérin horizontal de poussée 47 monté articulé d'une part sur une base fixe, par exemple le poteau adjacent 4, et d'autre part, par l'extrémité de sa tige, sur un bras oscillant 48 articulé en partie supérieure par un axe de pivotement 49 sur une structure d'appui 50 solidaire de chaque bras de structure correspondant.

Ce bras oscillant 48 soutient, par son extrémité inférieure, la plate-forme pivotante arrière 24 de la façon suivante.

La liaison de soutien s'effectue par l'intermédiaire d'un galet 51 dont est pourvue l'extrémité inférieure du bras oscillant 48. Ce galet est guidé dans la glissière 28 constituée par un profilé semi-fermé équipant chacun des bords longitudinaux de la plate-forme inclinable arrière, le long duquel il circule au fur et à mesure de la descente ou de la remontée de ladite plate-forme.

Afin de faciliter le passage des véhicules du niveau supérieur du véhicule porteur-remorqueur au niveau supérieur de la remorque ou pour augmenter simplement la longueur de la plate-forme arrière, celle-ci est équipée d'une passerelle 52 escamotable et mobile ou déplaçable le long de la plate-forme arrière.

Les différentes phases du fonctionnement général du plan de chargement composite selon l'invention se déroulent de la façon suivante.

Lors du début du chargement du véhicule porteur-remorqueur, le plan de chargement se trouve disposé en position basse en contact avec le plan de chargement inférieur solidaire du châssis.

Dans cette configuration, les plates-formes d'extrémité sont disposées dans le plan du platelage fixe 8 en alignement ou en quasi alignement avec les bras de structure 14 et 15.

Les véhicules, petits utilitaires ou autres, sont placés sur le pont, selon leur sens de transport, par exemple nez à nez comme dans le cas de la figure 1.

Le pont supérieur est ensuite monté jusqu'au niveau supérieur prédéterminé pour le transport, niveau lié à la particularité des véhicules transportés.

Lors de ce mouvement d'élévation, les plates-formes d'extrémité restent en position par l'effet du verrou d'association assurant la solidarisation temporaire avec l'écrou supérieur 20 ou par l'effet des écrous porteurs disposés en contact ou en rapprochement étroit.

Lorsque le pont est arrivé en position supérieure définitive de transport, les plates-formes d'extrémités sont actionnées en inclinaison.

Pour la plate-forme avant, le verrou 36 est libéré par déplacement pendulaire de sa pièce oscillante de verrouillage 37 qui s'extrait ainsi du coin d'arrêt oblique 42 pour venir s'immobiliser dans une des encoches 40 de la structure linéaire d'immobilisation 41.

La plate-forme avant est ainsi libérée en inclinaison jusqu'à une inclinaison déterminée par le type de véhicules chargés et réalisée par l'arrêt de déplacement de l'écrou, ou douille, fileté 31 sur la vis 16 correspondante.

L'inclinaison de la plate-forme dans la version à écrou débrayable s'effectue par rotation de la vis à contresens, alors que l'écrou débrayable supérieur est débrayé.

## Revendications

1. Plan de chargement composite pour une unité porte-véhicules, camion ou remorque d'un convoi routier porte-véhicules constituant un pont supérieur mobile (1) verticalement entre une position inférieure de chargement et une position supérieure de transport par un ensemble de levage avant et un ensemble de levage arrière (2) comportant chacun un couple de poteaux (4) sur lesquels il est monté articulé, caractérisé en ce que le pont supérieur mobile (1) présente d'une part un platelage fixe (8) bordé longitudinalement par des longerons (9) et (10) dont une extrémité au moins se poursuit à la manière d'un brancard par un bras double de structure (14) constituant avec les longerons la bordure du pont supérieur mobile (1), et d'autre part deux plate-formes inclinables l'une avant (23) et l'autre arrière (24) articulées à pivotement pour être inclinables en position opérante vers le bas de manière à permettre une position inclinée vers le bas des véhicules lors du transport et en ce que la plate-forme avant (23) est inclinable entre les bras du bras double d'extrémité (14).

2. Plan de chargement selon la revendication 1 caractérisé en que la plate-forme avant (23) est inclinable entre les bras du bras double de structure (14) par une articulation de pivotement située entre les deux ensembles de levage avant et arrière du pont supérieur mobile (1).

3. Plan de chargement selon la revendication 2 caractérisé en ce que l'extrémité du bras double de structure (14) est articulée aux poteaux (4) de l'ensemble de levage avant du pont supérieur mobile (1).

4. Plan de chargement selon la revendication 1 caractérisé en ce que les plate-formes inclinables avant (23) et arrière (24) sont articulées à pivotement sur les extrémités des longerons (9) et (10) bordant le platelage fixe (8).

5. Plan de chargement selon la revendication 1 ou 4 caractérisé en ce que la plate-forme arrière (24) est articulée à proximité du couple de poteaux arrière (4) de l'ensemble de levage arrière du pont supérieur mobile (1).

6. Plan de chargement selon l'une quelconque des revendications précédentes caractérisé en ce que les poteaux (4) des ensembles de levage sont à vis (16) et à écrous supérieur (20).

7. Plan de chargement selon la revendication 6 caractérisé en ce que la plate-forme avant (23) est portée par les vis de l'ensemble de levage avant.

8. Plan de chargement selon les revendications 1 et 7 caractérisé en ce que la plate-forme avant (23) repose à translation à chacune de ses extrémités sur ses profilés de bordure par l'intermédiaire de dispositifs porteurs de coulissement-blocage (30).

9. Plan de chargement selon la revendication 8 caractérisé en ce que chaque dispositif de coulissement-blocage (30) comprend d'une part un bloc coulissant (29) formé d'une douille de translation (31) mobile le long de la vis sur laquelle il est articulé et d'autre part un coulisseau (34) supportant à emplacement variable la plate-forme avant (23).

10. Plan de chargement selon les revendications 8 et 9 caractérisé en ce que la douille de translation (31) du bloc coulissant (29) est prolongée vers le haut par une pièce d'entretoise (35) coaxiale à la vis (16) et portant une pièce oblique de butée.

11. Plan de chargement selon les revendications précédentes 9 et 10 caractérisé en ce que les écrous supérieurs (20) comportent un verrou d'association (36) à pièce oscillante de verrouillage (37) actionné par un vérin (38) entre d'une part, les encoches (40) d'une structure linéaire solidaire du poteau adjacent (4) et d'autre part, un coin-butée (42) délimité par la pièce oblique de butée (43) et l'entretoise (35).

12. Plan de chargement selon l'une quelconque des revendications de 6 à 11 caractérisé en ce que l'écrou supérieur (20) est un écrou débrayable (44) et en ce que le bloc coulissant (29) renferme un écrou inférieur simple (45).

13. Plan de chargement selon la revendication 12 caractérisé en ce que l'écrou inférieur (45) est un écrou débrayable.

14. Plan de chargement selon les revendications 1, 4 ou 5 caractérisé en ce que la plate-forme arrière (24) est retenue ou suspendue par un dispositif double de soutien (46) comprenant de chaque côté latéral de ladite plate-forme, un mécanisme basculant formé d'un vérin horizontal de poussée (47) articulé sur un bras oscillant (48) monté pendulaire sur une structure fixe, chaque bras oscillant (48) comportant à son extrémité inférieure un galet (51) guidé dans la glissière dont chaque bord latéral de la plate-forme arrière (24) est équipé.

## Patentansprüche

1. Zusammengesetzte Ladefläche für eine Fahrzeugtransportereinheit, wie Zugfahrzeug oder Anhänger eines Fahrzeugtransporter -Lastzugs, die eine obere zwischen einer unteren Beladestellung und einer oberen Transportstellung mittels einer vorderen und einer hinteren Hubeinheit (2) vertikal bewegliche Brücke (1) aufweist, von denen jede ein Stützenpaar (4) umfaßt, an dem die Brücke gelagert ist, dadurch gekennzeichnet, daß die bewegliche obere Brücke (1) einerseits eine ortsfeste Bühne (8) aufweist, die längsseitig von Längsträgern (9, 10) begrenzt ist, deren zumindest eines Ende in der Art einer Gabel mit einer Doppelarmstruktur (14) verlängert ist, welche gemeinsam mit den Längsträgern den Randabschluß der oberen beweglichen Brücke (1) bildet, andererseits zwei neigbare Plattformen, eine vordere (23) und eine hintere (44), aufweist, die schwenkbar gelagert sind, um sie in die Betriebsstellung derart nach unten neigen zu können, daß die Fahrzeuge während des Transportes eine nach unten geneigte Stellung einnehmen können, und daß die vordere Plattform (23) zwischen den Armen der endständigen Gabel (14) neigbar ist.

2. Ladefläche nach Anspruch 1, dadurch gekennzeichnet, daß die vordere Plattform (23) zwischen den Armen der Doppelarmstruktur (14) mittels eines Schwenklagers neigbar ist, welches zwischen der vorderen und hinteren Hubeinheit der beweglichen oberen Brücke (1) angeordnet ist.

3. Ladefläche nach Anspruch 2, dadurch gekennzeichnet, daß das Ende der Doppelarmstruktur (14) an den Stützen (4) der vorderen Hubeinheit der oberen beweglichen Brücke (1) angelenkt ist.

4. Ladefläche nach Anspruch 1, dadurch gekennzeichnet, daß die vordere und hintere neigbare Plattform an den Enden der die ortsfeste Bühne (8) einfassenden Längsträger (9, 10) schwenkbar gelagert ist.

5. Ladefläche nach Anspruch 1 oder 4, dadurch gekennzeichnet, daß die hintere Plattform (24) nahe dem hinteren Stützenpaar (4) der hinteren Hubeinheit der oberen beweglichen Brücke (1) angelenkt ist.

6. Ladefläche nach einem der vorangehenden Ansprüche, dadurch gekennzeichnet, daß die Stützen (4) der Hubeinheit Spindeln (16) und obere Muttern (20) aufweisen.

7. Ladefläche nach Anspruch 6, dadurch gekennzeichnet, daß die vordere Plattform (23) von den Spindeln der vorderen Hubeinheit getragen ist.

8. Ladefläche nach Anspruch 1 und 7, dadurch gekennzeichnet, daß die vordere Plattform (23) bei ihrer translativischen Verlagerung an jedem ihrer Enden durch ihre Randprofile unter Zwischenschaltung von Trageinrichtungen mit Gleitsperre (30) getragen ist.

9. Ladefläche nach Anspruch 8, dadurch gekennzeichnet, daß jede Gleitsperreinrichtung (30) einerseits ein Gleitstück (29) aufweist, das von einer entlang der Spindel, an der sie gelagert ist, beweglichen Translationshülse (31) gebildet ist, andererseits einen Kulissenstein (34) aufweist, der bei variabler Lage die vordere Plattform (23) trägt.

10. Ladefläche nach Anspruch 8 und 9, dadurch gekennzeichnet, daß die Translationshülse (31) des Gleitstücks (29) nach oben durch ein zur Spindel (16) koaxiales Distanzstück (35) verlängert ist, welches ein geneigtes Anschlagteil aufweist.

11. Ladefläche nach Anspruch 9 und 10, dadurch gekennzeichnet, daß die oberen Muttern (20) eine Riegelverbindung (36) mit einem Schwenkriegel (37) aufweisen, der mittels eines Zylinders (38) zwischen den Aussparungen (40) einer an der benachbarten Stütze (4) befestigten, linearen Struktur einerseits und einem durch das geneigte Anschlagteil (43) und das Distanzstück (35) begrenzten Eckanschlag (42) andererseits betätigt wird.

12. Ladefläche nach einem der Ansprüche 6 bis 11, dadurch gekennzeichnet, daß die obere Mutter (20) eine Kupplungsmutter (44) ist und daß das Gleitstück (29) eine untere einfache Mutter (45) umschließt.

13. Ladefläche nach Anspruch 12, dadurch gekennzeichnet, daß die untere Mutter (45) eine Kupplungsmutter ist.

14. Ladefläche nach einem der Ansprüche 1, 4 oder 5, dadurch gekennzeichnet, daß die hintere Plattform (24) von einer Doppeltrageinrichtung (46) gehalten oder an ihr aufgehängt ist, welche an jeder Längsseite der Plattform einen Kippmechanismus aufweist, der von einem an einem ortsfesten Rahmen angebrachtem Kipparm (48) angelenkten Schubzylinder gebildet ist, wobei jeder Kipparm an seinem unteren Ende mit einer Rolle (51) versehen ist, die in der an jedem Seitenrand der hinteren Plattform (24) vorgesehenen Laufschiene geführt ist.

## Claims

1. Composite loading surface for a vehicle transporter unit, lorry or a trailer of a vehicle transporter road train consisting of an upper bridge (1) which can be moved vertically between a lower loading position and an upper transporting position by a front lifting assembly and a rear lifting assembly (2) each comprising a pair of posts (4) on which it is mounted in an articulated manner, characterised in that the movable upper bridge (1) firstly has a fixed covering (8) bordered longitudinally by side members (9) and (10) of which at least one end is extended in the manner of a stretcher by a double structural arm (14) forming, with the side members, the edge of the movable upper bridge (1), and secondly two inclinable platforms of which one (23) is at the front and the other (24) is at the rear and which are pivotably articulated so as to be downwardly inclinable in the operating position so as to permit a downwardly inclined position of the vehicles during transport; and in that the front platform (23) can be inclined between the arms of the double end arm (14).

2. Loading surface according to Claim 1, characterised in that the front platform (23) can be inclined between the arms of the double structural arm (14) by a pivoting articulation joint located between the two front and rear lifting assemblies of the upper movable bridge (1).

3. Loading surface according to Claim 2, characterised in that the end of the double structural arm (14) is articulated on the posts (4) of the front lifting assembly of the movable upper bridge (1).

4. Loading surface according to Claim 1, characterised in that the front and rear inclinable platforms (23) and (24) respectively are pivotably articulated on the ends of the side members (9) and (10) bordering the fixed covering (8).

5. Loading surface according to Claim 1 or 4, characterised in that the rear platform (24) is articulated in the vicinity of the pair of rear posts (4) of the rear lifting assembly of the movable upper bridge (1).

6. Loading surface according to any one of the preceding claims, characterised in that the posts (4) of the lifting assemblies have upper nuts and bolts (20) and (16) respectively.

7. Loading surface according to Claim 6, characterised in that the front platform (23) is carried by the bolts of the front lifting assembly.

8. Loading surface according to Claims 1 and 7, characterised in that the front platform (23) rests in translation at each of its ends on the profiled edge sections by means of sliding and locking carrier devices (30).

9. Loading surface according to Claim 8, characterised in that each sliding and blocking device (30) firstly comprises a slide block (29) formed by a translation bush (31) which can move along on the bolt on which it is articulated and secondly a slide (34) supporting the front platform (23) in variable locations.

10. Loading surface according to Claims 8 and 9, characterised in that the translation bush (31) of the slide block (29) is extended upwards by a spacer member (35) which is coaxial to the bolt (16) and supports an oblique stop part.

11. Loading surface according to the preceding Claims 9 an 10, characterised in that the upper nuts (20) comprise a connection locking device (36) with a swinging locking member (37) actuated by a jack (38) between, firstly, the recesses (40) in a linear structure integral with the adjacent post (4) and, secondly, a wedge stop (42) delimited by the oblique stop part (43) and the spacer (35).

12. Loading surface according to any one of Claims 6 to 11, characterised in that the upper nut (20) is a disenageable nut (44); and in that the slide block (29) comprises a simple lower nut (45).

13. Loading surface according to Claim 12, characterised in that the lower nut (45) is a disengageable nut.

14. Loading surface according to Claims 1, 4 or 5, characterised in that the rear platform (24) is held or suspended by a double support device (46) comprising on each lateral side of the platform a tilting mechanism formed by a horizontal thrust jack (47) articulated on a swinging arm (48) mounted in a suspended manner on a fixed structure, each swinging arm (48) comprising at its lower end a roller (41) guided in the slide rail with which each lateral edge of the rear platform (24) is equipped.
